# EUROPÄISCHE PATENTSCHRIFT

(11) **EP 1 941 177 B1**
(45) Veröffentlichungstag und Bekanntmachung des Hinweises auf die Patenterteilung: **23.09.2009**
(21) Anmeldenummer: 06806322.1
(22) Anmeldetag: 17.10.2006
(51) Int. Cl.: F16D 65/21

(54) **SCHEIBENBREMSE MIT ELEKTROMOTORISCHEM AKTUATOR UND NOTLÖSEEINRICHTUNG**
DISC BRAKE WITH AN ELECTRIC MOTOR ACTUATOR AND AN EMERGENCY RELEASING DEVICE
FREIN A DISQUE COMPORTANT UN ACTIONNEUR A MOTEUR ELECTRIQUE ET UN DISPOSITIF DE LIBERATION D'URGENCE

(30) Priorität: 18.10.2005 DE 102005049785
(43) Veröffentlichungstag der Anmeldung: 09.07.2008
(73) Patentinhaber: KNORR-BREMSE Systeme für Nutzfahrzeuge GmbH, 80809 München (DE)
(72) Erfinder: SEIDENSCHWANG, Matthias, 80637 München (DE); GEISSLER, Steffen, 85399 Hallbbergmoos (DE); TRIMPE, Robert, 82234 Wessling (DE); BAUMGARTNER, Johann, 85368 Moosburg (DE); MILLER, Bernhard, 71263 Weil der Stadt (DE); HERGES, Michael, 80935 München (DE)
(74) Vertreter: Mattusch, Gundula
(86) Internationale Anmeldenummer: PCT/EP2006/009987
(87) Internationale Veröffentlichungsnummer: WO 2007/045428

(56) Entgegenhaltungen:
- WO-A-03/100282
- WO-A-03/106857
- WO-A-20/06040006
- WO-A2-02/37535

## Beschreibung

Die Erfindung betrifft eine Scheibenbremse mit elektromotorischem Aktuator nach dem Oberbegriff des Anspruchs 1.

Bei elektromotorischen betätigten Scheibenbremsen ist zu sichern, dass sie im Notfall, so nach einer Bremsung auch im Störungsfall z.B. bei Stromausfall- wenn sie nicht gerade die Funktion einer Feststell- bzw. Parkbremse ausführen - vollständig öffnen.

Bei pneumatisch und/oder hydraulisch betätigten Bremsen ist ein derartiges selbsttätiges Öffnen in der Regel gewährleistet. Bei elektromotorisch zugespannten Bremsen mit Selbstverstärkung kann es jedoch Betriebszustände der Radbremse geben, in denen sie ohne besondere Maßnahme "zufallen" oder in denen sie das gerade während einer Bremsung eingestellte Bremsmoment beibehalten oder in denen die Bremse zumindest nicht genügend weit öffnen würde.

Die gattungsgemäße WO 2003/100282 A1 beschreibt ein Steuersystem für eine elektromechanische Bremse mit Selbstverstärkung, welches abhängig vom Bewegungszustand eines Fahrzeugs beim Auftreten eines Fehlers die Bremse aktiv zuspannt oder löst. Diese Lösung ist aber in sicherheitstechnischer Hinsicht -. So bei einem Stromausfall - nicht optimal.

Die Aufgabe der vorliegenden Erfindung besteht darin, das vorstehend beschriebene Problem auf einfache Weise zu beheben.

Erfindungsgemäß wird diese Aufgabe mit den Merkmalen des Anspruchs 1 gelöst.

Vorteilhafte Ausgestaltungen sind den Unteransprüchen zu entnehmen.

Die Notlöseinrichtung sichert bei Zuspannvorrichtungen in selbstverstärkender Bauart, die ein erstes, die Selbstverstärkungswirkung realisierendes Rampen- oder Keilsystem aufweisen auch im Störungsfall der Bremse ggf. ein sicheres Lösen derselben. Ein Zuziehen wird bei geeigneter Auslegung auch bei Scheibenbremsen mit einem sehr hohen Selbstverstärkungsfaktor vermieden.

Die Notlöseeinrichtung bringt bei einem Ausfall oder einer Abschaltung der elektrischen Energieversorgung der Radbremse diese automatisch in einen sicher gelösten Zustand, und zwar unabhängig vom Bewegungszustand des Fahrzeugs.

Besonders vorteilhaft ist es, wenn die Notlöseeinrichtung derart ausgelegt ist, dass sie mit rein mechanischen Mitteln unabhängig vom Vorhandensein einer elektrischen Energieversorgung mit einer großen zulässigen Dauerbelastung eine sichere Bremslösung gewährleistet. Gerade bei einem Ausfall der elektrischen Energieversorgung einer Radbremse ist es von besonderer sicherheitstechnischer Bedeutung, dass die Notlöseeinrichtung ohne elektrische Energie ihre Funktion erfüllt.

Besonders vorteilhaft und konstruktiv einfach lässt sich die Notlöseeinrichtung mittels des weiteren Keil- oder Rampensystems realisieren, mit dem die Länge wenigstens eines Kraftübertragungselementes, insbesondere wenigstens eines Druckstempels der Zuspannvorrichtung unabhängig von der Stellung des Rampensystems zur Selbstverstärkung schaltend insbesondere nach Art einer bistabil schaltbaren Anordnung veränderlich ist.

Dabei ist es vorteilhaft, wenn die Notlöseeinrichtung eine steuerbare Haltevorrichtung zum Blockieren und Lösen des weiteren Keil- oder Rampensystems aufweist, mit der ein ungewolltes Lösen der Bremse außer im Aktivierungsfall bzw. im vordefinierten Lösefall, von dem z.B. Parkbremssituationen oder dgl. ausgenommen werden können, aufweist.

Besonders einfach ist es, dass das weitere Keil- oder Rampensystem dazu ausgelegt ist, die axiale Länge wenigstens eines Druckstempels der Zuspannvorrichtung schaltbar zu reduzieren, wobei das weitere Keil- oder Rampensystem Wälzkörper aufweist, mittels derer die axiale Länge von wenigstens einem der Druckstempel schaltbar reduzierbar ist.

Vorteilhaft ist zudem nach einer Variante auch eine Krafteinleitungseinrichtung zur Betätigung der Notlöseeinrichtung. So kann die Krafteinleitungseinrichtung zur Betätigung der Notlöseeinrichtung einen in einer Aufnahme verschiebbar geführten Stempel aufweisen.

In diesem Fall kann es zweckmäßig sein, wenn im Kraftfluss der Zuspannvorrichtung in der Aufnahme mehrere übereinander angeordnete Lagen von Wälzkörpern angeordnet sind.

Es ist auch denkbar, dass die Halteeinrichtung als ein vorzugsweise bistabiles Hebelgetriebe mit einem Halteelement und wenigstens einem oder mehreren Kraftspeichern ausgebildet ist.

Dabei bietet es sich wiederum an, wenn im Kraftfluss jedes Druckstempels eine der Notlöseeinrichtungen angeordnet ist, welche von der Halteeinrichtung über zwei zusammenwirkende Kniehebeleinrichtungen steuerbar ausgebildet ist. Vorzugsweise ist die andere Kniehebeleinrichtung mit dem Halteelement und einem ersten Kraftspeicher zusammenwirkend verbunden ist, wobei das Halteelement vorzugsweise als ein Elektromagnet ausgebildet ist.

Es ist auch vorteilhaft, wenn die Stellvorrichtung ein bistabiler Elektromagnet mit einem mit dem Kniehebelgetriebe gekoppelten Antriebsschieber ist und das Steuerelement ein Elektromagnet mit einem Anschlagschieber.

Die erfindungsgemäße Scheibenbremse mit Notlöseeinrichtung weist zusammengefasst folgende Vorteile auf:
- eine große zulässige Dauerbelastung
- ein leichtgängiges Auslöseverhalten
- ein kompaktes Einbauvolumen
- ein Lösen der Bremse durch Abfall eines Elektromagnets bzw. Halteelement bei Ausfall der elektrischen Energieversorgung
- ein selbsttätiges Rückstellen in Ausgangsposition bei kraftfreiem Zustand durch Kraftspeicher bzw. Rückholfeder
- ein Blockieren des Bremslösens bei Parkbremsfunktion durch Bestromung eines Parkbremsmagneten bei Abschaltung eines Bremslösemagneten
- ein Lösen der Parkbremse durch kurzes Ansteuern des Bremslösemagneten ein schüttel- bzw. rüttelfeste Konstruktion.

Nachfolgend wird die Erfindung anhand der in den schematischen Figuren der Zeichnung angegebenen Ausführungsbeispiele näher erläutert. Es zeigt dabei:
- Figur 1: eine schematische Prinzipdarstellung einer erfindungsgemäßen Ausführungsform einer Scheibenbremse;
- Figur 2: eine schematische Darstellung eines ersten Ausführungsbeispiels einer erfindungsgemäßen Scheibenbremse in einem ersten Zustand;
- Figur 3: eine schematische Darstellung des ersten Ausführungsbeispiels nach Fig. 2 in einem zweiten Zustand;
- Figur 4: eine schematische Darstellung des ersten Ausführungsbeispiels nach Fig. 2 in einem dritten Zustand;
- Figur 5: eine schematische Darstellung eines zweiten Ausführungsbeispiels einer erfindungsgemäßen Scheibenbremse in einem ersten Zustand; und

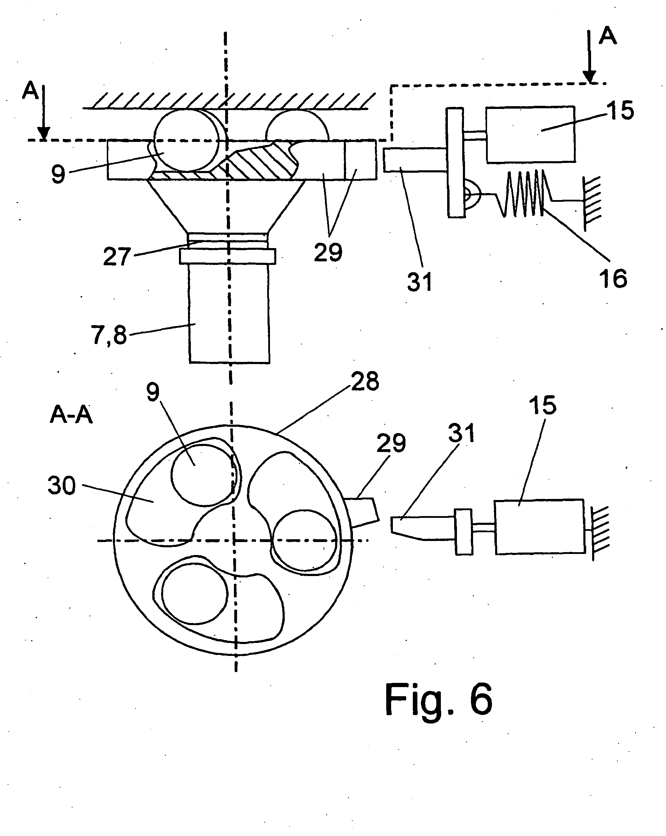

- Figur 6: eine schematische Darstellung des zweiten Ausführungsbeispiels nach Fig. 5 in einem zweiten Zustand; und
- Figur 7a...c: eine schematische Darstellung einer zusätzlichen Einrichtung einer erfindungsgemäßen Scheibenbremse in drei Zuständen.

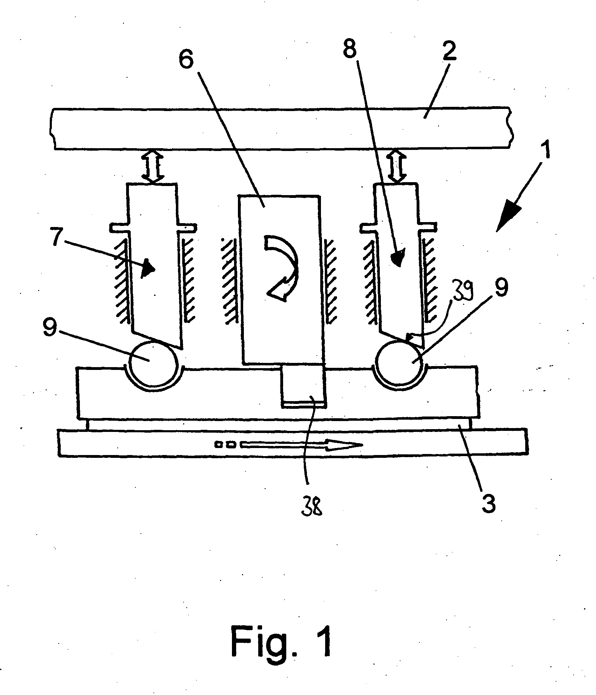

In Fig. 1 ist eine schematische Prinzipdarstellung einer selbstverstärkend wirkenden Scheibenbremse 1 dargestellt. An bzw. über einer Bremsscheibe 3, die mit einer Achse oder einem Rad eines Fahrzeugs gekoppelt ist, ist ein die Bremsscheibe zumindest im Umfangsbereich rahmenartig einfassender Bremssattel 2 angeordnet, in dem wiederum beidseits der Bremsscheibe Bremsbeläge 4 und eine auf diese einwirkende Zuspannvorrichtung angeordnet sind.

Vorzugsweise ist die Zuspannvorrichtung auf einer Seite der Bremsscheibe angeordnet. Ihr ist ein elektromotorischer Aktuator 6 zugeordnet, der hier mittels einer Kurbel 38 den Bremsbelag in Umfangsrichtung der Bremsscheibe (bzw. tangential) verschiebt. Dabei läuft der Bremsbelag mit Wälzkörpern 9 auf keilartigen schrägen Rampen 39 von Druckstempeln 7, 8 auf, die der Zuspannvorrichtung zugehören und die vorzugsweise - z.B. zum Ausgleich von Verschleiß oder für einzelne Bremsfunktionen - axial längenveränderlich sind, indem sie aus einer Spindel und einer Mutter bzw. Hülse bestehen, die auf der Spindel verschraubbar ist (hier nicht dargestellt).

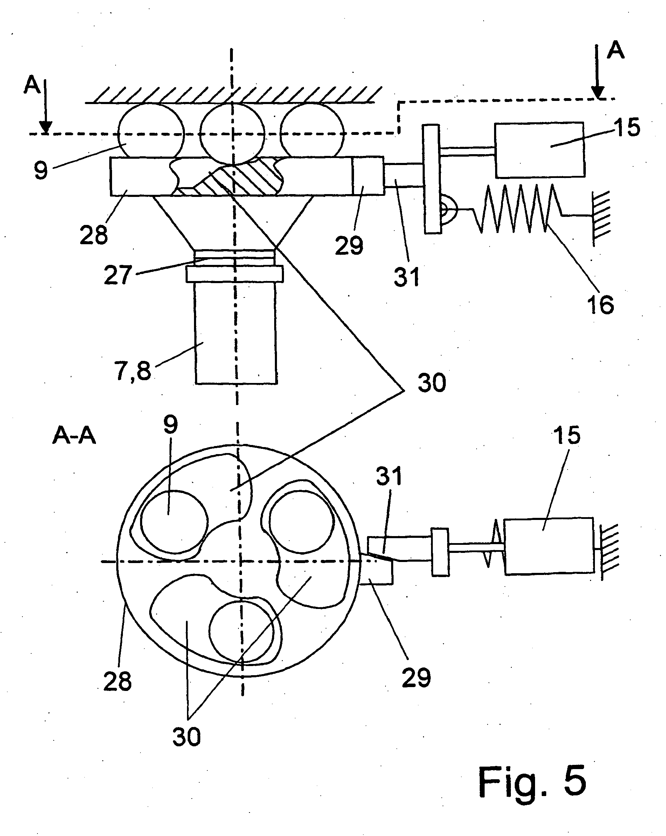

Ihr Antrieb erfolgt über ein Getriebe (hier nicht dargestellt) zwischen dem Aktuator 6 und den Druckstempeln 7, 8. An ihrer zum Bremssattel gewandten Seite können sie sich an diesem z.B. über ein Gleitlager oder eine Kugel abstützen, die Drehungen der Spindel des Druckstempels erlaubt, wenn die Mutter auf der Spindel drehfest gehalten wird. Dies wird weiter unter noch aus Fig. 5 und der zugehörigen Beschreibung deutlich.

Vorzugsweise ist den Druckstempeln 7, 8 an irgendeiner Stelle - z.B. im hinteren Bereich der Abstützung am Bremssattel eine Notlöseeinrichtung 5 - zugeordnet (siehe z.B. Fig. 5). Die Notlöseeinrichtung 5 dient dazu, bei einem Ausfall der elektrischen Energieversorgung für den elektromotorischen Antrieb 6 die von diesem über die Zuspannvorrichtung, hier die Druckstempel 7, 8 abgestützte Zuspannkraft aufzuheben, so dass der Kraftfluss der Zuspannkraft nicht mehr auf den Bremsbelag 4 und somit auf die Bremsscheibe 3 einwirken kann. Sie weist neben dem Keil- oder Rampensystem zur Selbstverstärkung hierzu vorzugsweise ein weiteres Keil- oder Rampensystem auf, dass im "Normalbetrieb" gesperrt und im Notlösefall gelöst wird.

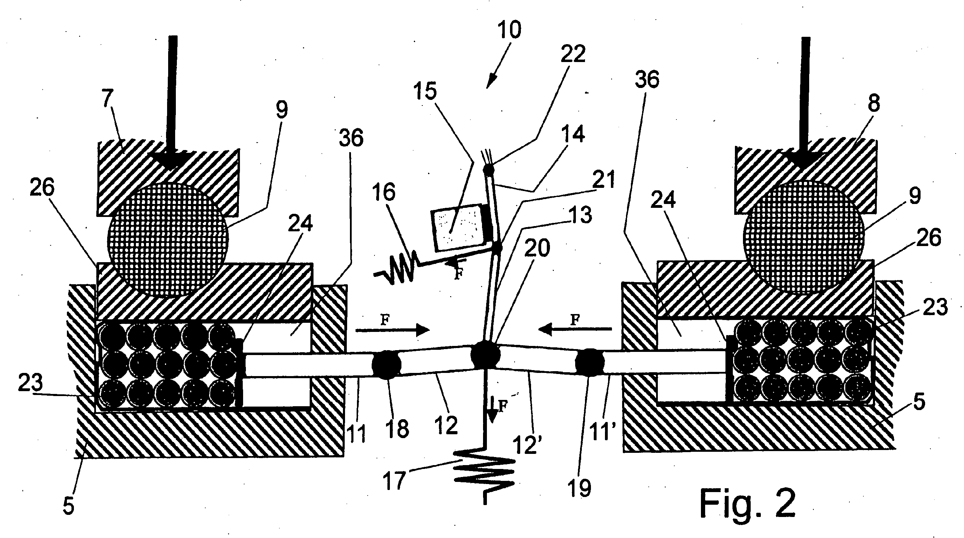

Die Notlöseeinrichtung 5 wird in einem bevorzugten ersten Ausführungsbeispiel in Fig. 2 bis 4 in unterschiedlichen Zuständen gezeigt. Wie in Fig. 2 gezeigt wird, kann sie z.B. so ausgeführt sein, dass jeweils eine der Notlöseeinrichtungen 5 einem der Druckstempel 7, 8 zugeordnet ist.

Die Notlöseeinrichtung 5 weist nach dem in Fig. 2 gezeigten Ausführungsbeispiel eine Aufnahme 36 auf, in welcher Wälzkörper 23 in diesem Beispiel in drei Lagen übereinander angeordnet sind, wobei die mittlere Lage gegenüber der oberen und unteren Lage etwas versetzt ist, was durch ein geeignet geformtes Teil an der Innenseite der Aufnahme 36 ermöglicht wird.

Die obere Lage der Wälzkörper 23 ist in Kontakt mit der Unterseite eines Stempels 26, der über das Kraftübertragungselement 9, eine Kugel, in Verbindung steht. Die untere Lage der Wälzkörper 23 liegt auf dem Boden der Aufnahme 36 auf.

Die Lagen der Wälzkörper 23 werden auf den sich gegenüberliegenden Seiten der beiden Aufnahmen 36 der gegenüberliegenden Notlöseeinrichtungen 5 jeweils von einer Platte 24 am Ende eines Schiebers 11, 11' so gehalten, dass sie übereinanderliegen und eine bestimmte Gesamthöhe bilden, die etwas geringer ist als der dreifache Durchmesser der Wälzkörper 23. Diese bilden mit dem Schieber 11, 11' eine steuerbare Kraftübertragungseinrichtung für die Zuspannkraft, die in den Fig. 2 bis 4 jeweils durch einen nach unten gerichteten Pfeil angedeutet ist.

Die beiden Schieber 11, 11' liegen einander an ihren anderen Enden gegenüber und sind über erste Hebel 12, 12' in einer ersten und zweite Drehachse 18, 19 gelenkig verbunden sind. Die ersten Hebel 12, 12' sind in einer dritten Drehachse 20 gelenkig miteinander verbunden und bilden einen ersten Kniehebel. An der dritten Drehachse 20 ist ein zweiter Kraftspeicher 17, vorzugsweise eine Zugfeder, angebracht, welche in Zuspannkraftrichtung wirkt.

In dazu entgegengesetzter Richtung ist ein weiterer Kniehebel, bestehend aus einem zweiten und dritten Hebel 13, 14 gelenkig angebracht, die eine vierte Drehachse 21 aufweisen, in der sie miteinander gelenkig verbunden sind.

Der dritte Hebel 14 ist mit seinem anderen Ende in einer fünften Drehachse 22 gelenkig mit einem festen Gehäusepunkt verbunden.

An der vierten Drehachse 21 ist ein erster Kraftspeicher 16 in Form einer Zugfeder angebracht, dessen Kraftrichtung in einem Winkel zu Zuspannrichtung verläuft.

Der dritte Hebel 14 steht mit einem Halteelement 15 in Kontakt, das in diesem Beispiel als ein Elektromagnet ausgebildet ist. Die Hebelgetriebe 12, 12' und 13, 14 mit den Kraftspeichern 16, 17 und dem Halteelement 15 werden als Halteeinrichtung 10 bezeichnet.

Fig. 2 zeigt den Normalzustand der Scheibenbremse 1, bei welchem der Elektromagnet als Halteelement 15 mit elektrischer Energie versorgt wird und den dritten Hebel 14 des zweiten Kniehebelgetriebes mit magnetischer Kraft festhält. Über die Hebelverstärkung dieses Kniehebels wird der zweite Kniehebel 12, 12' in der dargestellten Lage gehalten, wobei die Kraftspeicher 16, 17 unterstützend wirken. Die Zuspannkraft (zwei nach unten gerichtete Pfeile) wird auf die Stempel 26 und über die Wälzkörper 23 auf den Bremsbelag 4 übertragen, wenn eine Bremsung erfolgt. Die dabei in den Wälzkörpern 23 erzeugten seitlichen Kräfte F orthogonal zur Zuspannkraftrichtung werden von der Halteeinrichtung 10 mit ihren Hebelgetrieben und dem Halteelement 15 aufgenommen und ins Gehäuse abgeleitet.

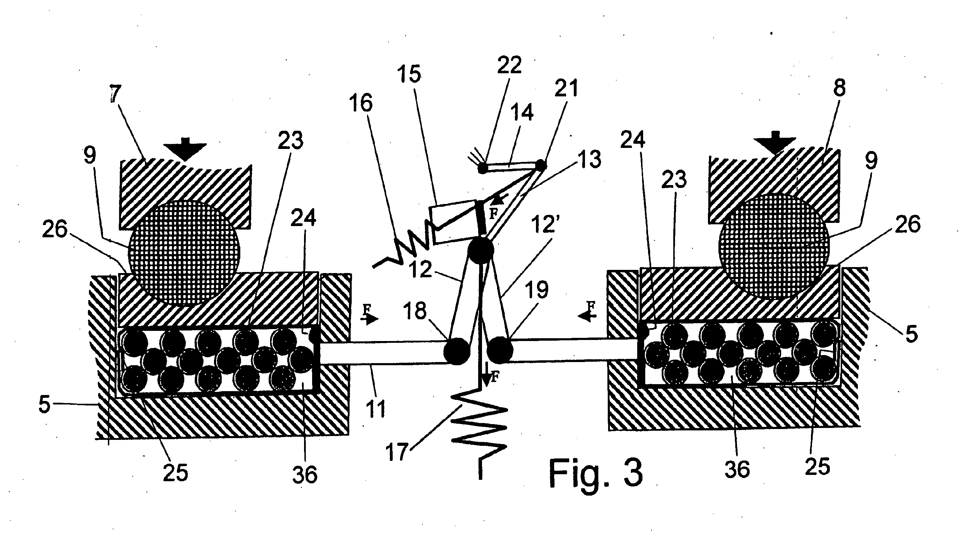

Bei einem Stromausfall wird während einer Bremsung, wie Fig. 3 zeigt, auch die elektrische Energieversorgung des Haltemagneten 15 ausfallen. Nun werden die in dem Kraftfluss der Zuspannkraft angeordneten Wälzkörper 23 vom Stempel 26 weiterhin zusammengedrückt, wobei die Haltekraft der Halteeinrichtung 10 jedoch entfällt. Die leicht versetzte Stellung der Wälzkörper 23 in den übereinander angeordneten Lagen begünstigt eine Verschiebung dieser. Die Schieber 11 werden somit in ihrer Längsrichtung aufeinander zugeschoben, wobei das Kniehebelgetriebe 12, 12' gegen die Kraft des zweiten Kraftspeichers 17, welche geringer ist als die von den Schiebern übertragene Kraft, nach oben ausgelenkt wird, da sich das zweite Kniehebelgetriebe 13, 14 mit dem dritten Hebel 14 vom nicht mehr bestromten Halteelement 15 lösen kann. Die Kraft des zweiten Kraftspeichers 16 ist so bemessen, dass sie kleiner ist als die Kraft, die in ihre entgegengesetzte Richtung durch Einwirkung der Zuspannkraft über die Schieber 11, 11' wird. Die Stempel werden durch die Bremskraft nach unten gedrückt, da sich die Lagen der Wälzkörper 23 ineinander verschieben und somit ihre Gesamthöhe verkleinern. Dadurch wird die Bremskraft abgebaut und die Bremsbeläge 4 liegen nicht mehr mit der Bremskraft an der Bremsscheibe 3 an, wodurch sie gelöst sind.

Ist der Stromausfall behoben, so kehren die Lagen der Wälzkörper 23 wieder in ihre erste Stellung zurück, da die Schieber 11, 11' über die Kraftspeicher 16, 17 mittels der Hebelgetriebe die Lagen der Wälzkörper 23 in die erste Stellung zurückschieben. Somit erfolgt eine selbsttätige Rückstellung bei kraftfreiem Zustand.

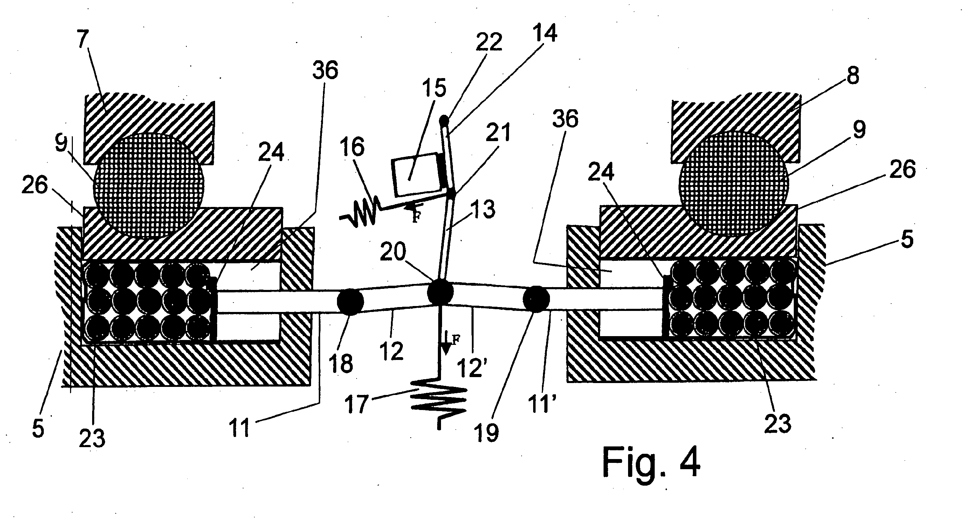

Einen weiteren Fall zeigt Fig. 4, bei welchem ein Stromausfall auftritt, aber keine Bremsung erfolgt. In diesem Fall ist keine Zuspannkraft vorhanden, die über die Wälzkörper 23 deren Verschiebung zur Erzeugung der seitlichen Kraft F bewirken könnte. Auf die Halteeinrichtung 10 wirkt somit seitens der Schieber 11, 11' keine Kraft F ein, jedoch ist der Elektromagnet bei Stromausfall ohne magnetische Haltekraft. In diesem Fall wirken die Kräfte des ersten und zweiten Kraftspeichers 16 und 17 auf die Hebelgetriebe über die Drehachsen 21 und 20 so ein, dass die Halteeinrichtung 10 die Schieber 11, 11' in ihrer Position hält, wobei die Lagen der Wälzkörper 23 in der ersten Stellung verbleiben. Bei einer nach dem Stromausfall wiederkehrenden Haltekraft des Elektromagneten 15 wird die Haltekraft der Kraftspeicher 16, 17 überlagert und bei einer darauffolgenden Bremsung mit Erzeugung der seitlichen Kraft F über die Wälzkörper 23 kann diese von der Halteeinrichtung 10 sicher gehalten werden.

Fig. 5 zeigt ein zweites Ausführungsbeispiel, bei welchem die Druckspindeln 7, 8 an einem ihrer Enden einen Drehteller 28 über einem Gleitlager 27 aufweisen, der die von der Spindel erzeugte Kraft über Kraftübertragungselemente 9, die vorzugsweise als Wälzkörper ausgebildet sind, am Bremssattel abstützt. An der zum Bremsbelag gewandten Seite kann ein Rampensystem nach Art der Fig. 1 ausgebildet sein.

In diesem Beispiel werden als Wälzkörper des zweiten Rampensystems beispielhaft drei Kugeln 9 verwendet, die auf dem Drehteller 28.in Laufbahnen 30 angeordnet sind. Die Laufbahnen 30 sind in der zur Zuspannkraftrichtung orthogonalen Fläche auf Umfangsabschnitten angeordnet (siehe Fig. 5 Schnittansicht A-A unten) und weisen unterschiedliche Tiefen in Gegenrichtung der Zuspannkraftrichtung auf.

Der Drehteller 28 an der zum Bremssattel weisenden Seite der Spindeln 7, 8 weist (siehe Fig. 5 Schnittansicht A-A unten) an seinem Rand einen Anschlag 29 auf, der mit einem Zahn 31 in Wirkverbindung steht. Der Zahn 31 ist an einem Ende eines Stellbauteils eines Halteelementes 15 angeordnet, das mit einem Gehäuse feststehend verbunden ist. Der Zahn 31 ist außerdem über einen Kraftspeicher 16 mit dem Gehäuse verbunden.

Fig. 5 zeigt den Zustand im Normalbetrieb. Bei einer Bremsung wird der Drehteller 28 über seinen mit dem Zahn 31 in Eingriff stehenden Anschlag 29 drehfest gehalten. Eine Relativbewegung der sich drehenden Spindel wird über das axiale Gleitlager 27 ermöglicht. Der Zahn 31 ist in dieser Eingriffsstellung von dem Halteelement 15 gehalten, das als ein Elektromagnet ausgebildet ist und im Normalbetrieb bestromt ist, wobei er den Zahn 31 gegen die Kraft des Kraftspeichers 16 in Eingriffsstellung hält.

Die Kugeln 9 befinden sich auf den Laufbahnen 30 in der Stellung mit der geringsten Tiefe, wie in Fig. 5 oben in einer gebrochenen Schnittdarstellung zu sehen ist, und übertragen die Zuspannkraft der Spindel.

Bei Stromausfall beim gleichzeitigen Bremsen wird auch der Haltemagnet 15 stromlos, wobei der Zahn 31 durch die Kraft des Kraftspeichers, beispielsweise eine Zugfeder, außer Eingriff mit dem Anschlag 29 gebracht wird. Durch die Zuspannkraft, die in den Kugeln 9 auf die Laufbahnen 30 mit ihren zum Teil schrägen Profilen wirkt, wird eine Tangentialkraft zur Verdrehung des Drehtellers 28 erzeugt, die ihn so verdreht, dass die Kugeln 9 auf den Laufbahnen 30 in deren tiefste Ausnehmungen gelangen und somit die Bremskraft abbauen.

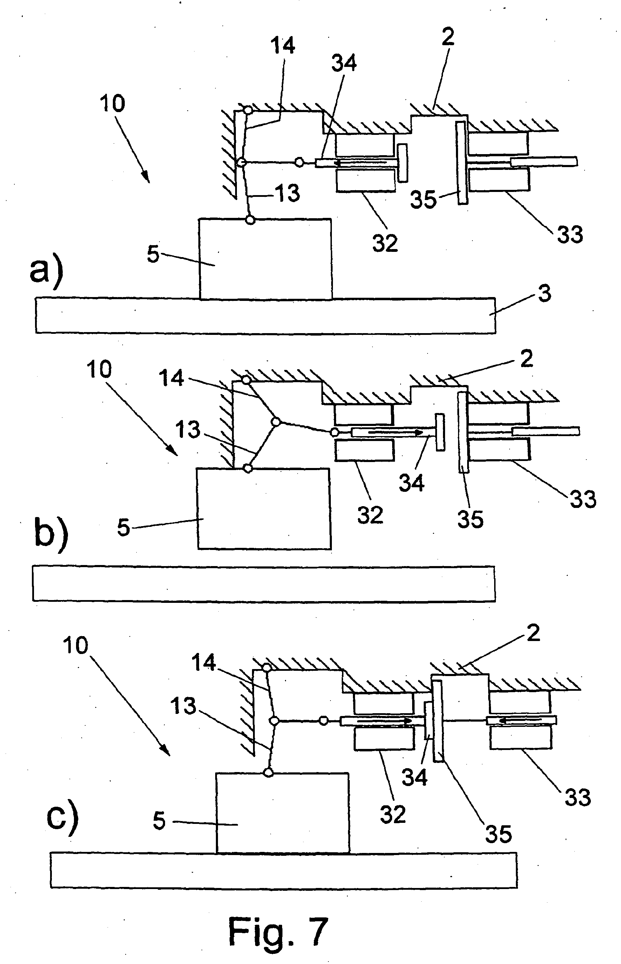

Ein weiteres - das allgemeine Funktionsprinzip erläuterndes Ausführungsbeispiel mit einer zusätzlichen Einrichtung einer erfindungsgemäßen Scheibenbremse in drei Zuständen zeigt Fig. 7a bis c in einer schematische Darstellung.

Hierbei wird nur das zweite Kniehebelgetriebe (siehe Fig. 2 bis 4) mit den Hebeln 13 und 14 gezeigt. Dieses Kniehebelgetriebe ist an einem Ende am Bremssattel 2 - wie in Fig. 2 bis 4 gezeigt - gelenkig angebracht, wobei der untere Gelenkpunkt mit dem ersten Hebelgetriebe verbunden ist, das hier der Einfachheit halber als ein Kasten dargestellt ist, und dessen Funktion bereits oben erläutert ist.

Das Kniehebelgetriebe 13, 14 ist mit einem Antriebsschieber 34 einer Stellvorrichtung 32 verbunden, wobei der Anlenkpunkt des Antriebsschiebers 34 die Drehachse der beiden Hebel 13 und 14 ist. Die Stellvorrichtung 32 ist in diesem Beispiel ein bistabiler Elektromagnet mit zwei Stellungen. Der Antriebsschieber 34 durchläuft die Stellvorrichtung 32 und ist an seinem anderen Ende mit einer Platte versehen, welcher eine größere Platte eines Steuerschiebers 35 gegenüberstehend angeordnet ist. Der Steuerschieber 35 durchläuft ein Steuerelement 33, das als ein Elektromagnet ausgebildet ist.

Fig. 7a zeigt eine erste Stellung des Kniehebels 13, 14, in der dieser mit seinem mittleren Gelenkpunkt, an dem der Antriebsschieber 34 gelenkig befestigt ist, an einem linken Anschlag anliegt. Dieses ist die erste bistabile Stellung der Stellvorrichtung 32. Der Steuerschieber befindet sich in einer eingezogenen ersten Stellung. Dieses ist der Zustand für eine Parkbremse, in welcher ein Lösen der Bremse auch durch Stromausfall nicht möglich ist, da der erste bistabile Zustand des bistabilen Elektromagneten durch einen Stromimpuls beim Betätigen der Parkbremse eingestellt ist und für die Beibehaltung dieser Stellung keine elektrische Energie benötigt.

Ein Lösen der Parkbremse erfolgt durch Bestromen des bistabilen Elektromagnets mit einem elektrischen Impuls auf eine zweite Wicklung des bistabilen Elektromagnets oder mittels eines umgepolten Impulses, wie als bekannt vorausgesetzt wird. Damit nimmt der Antriebsschieber 34 die in Fig. 7b gezeigte zweite bistabile Stellung ein, wobei diese durch einen weiteren Anschlag begrenzt ist, der durch Anschlag des Kastens an dem Bremssattel 2 nur symbolisch dargestellt ist. Dieser in Fig. 7b gezeigte Zustand ist ebenfalls ein stromloser Zustand, bei dem die Bremse gelöst ist.

Beim Einschalten der elektrischen Versorgung wird nun das Steuerelement 33 bestromt, welches als Elektromagnet den Steuerschieber 35 in die in Fig. 7c gezeigte

Stellung gegen einen Anschlag im Bremssattel 2 verstellt, wobei der Antriebsschieber 34 berührt und in eine Zwischenstellung verstellt wird, bei der die Bremse betriebsbereit ist. Die Verstellung des Antriebsschiebers 34 ist möglich, da der bistabile Elektromagnet nicht bestromt ist, sondern nur durch einen Stromimpuls eine Verstellung des Antriebsschiebers auslöst.
Bei Stromausfall wird der Steuerschieber 35 durch nicht gezeigte Kraftspeicher in seine stromlose Stellung gemäß Fig. 7b zurückgezogen.

Die zusätzliche Einrichtung für die Parkbremse ermöglicht zwei stabile Zustände. Im ersten Zustand ist bei Ausfall oder Abschaltung der elektrischen Energieversorgung die Bremse gelöst, im zweiten Zustand ist bei Ausfall oder Abschaltung der elektrischen Energieversorgung die Bremse zuspannend oder im zugespannten Zustand haltend. Die Umschaltung vom bei Ausfall lösenden Zustand zum bei Ausfall schließenden Zustand erfolgt, wenn die Parkbremse eingelegt wird und umgekehrt. Tritt der Ausfall dann ein, so erfolgt die vorher eingestellte Wirkung automatisch, ohne beim Eintritt des Ausfalls einen Vorgang aktiv auslösen zu müssen.

### Bezugszeichenliste

- 1: Scheibenbremse
- 2: Bremssattel
- 3: Bremsscheibe
- 4: Bremsbelag
- 5: Notlöseeinrichtung
- 6: Elektromotorischer Antrieb
- 7: Erste Zuspannvorrichtung
- 8: Zweite Zuspannvorrichtung
- 9: Kraftübertragungselement
- 10: Halteeinrichtung
- 11, 11': Schieber
- 12, 12': Erster Hebel
- 13: Zweiter Hebel
- 14: Dritter Hebel
- 15: Halteelement
- 16: Erster Kraftspeicher
- 17: Zweiter Kraftspeicher
- 18: Erste Drehachse
- 19: Zweite Drehachse
- 20: Dritte Drehachse
- 21: Vierte Drehachse
- 22: Fünfte Drehachse
- 23: Wälzkörper
- 24: Platte
- 25: Führungselement
- 26: Stempel
- 27: Gleitlager
- 28: Drehteller
- 29: Anschlag
- 30: Wälzkörperlaufbahn
- 31: Zahn
- 32: Stellvorrichtung
- 33: Steuerelement
- 34: Antriebsschieber
- 35: Steuerschieber
- 36: Aufnahme
- 37: Hebel
- 38: Kurbel
- 39: Rampen
- F: Kraft
- n: Zahl

## Patentansprüche

1. Scheibenbremse mit elektromotorischem Aktuator (6), der auf eine in selbstverstärkender Bauart ausgelegte Zuspannvorrichtung zum Zuspannen wenigstens eines Bremsbelages (4) in Richtung einer Bremsscheibe (3) einwirkt, wobei im Kraftfluss der Zuspannvorrichtung (7, 8) eine in einem vordefinierten Notfall wie einem Stromausfall automatisch aktivierbare Notlöseeinrichtung (5) zum Lösen des Bremse aus ihrer Bremsstellung angeordnet ist, welche dazu ausgelegt ist, die Länge eines Kraftübertragungselementes der Zuspannvorrichtung schaltend zu ändern, wobei die Zuspannvorrichtung (7, 8) ein erstes, die Selbstverstärkungswirkung realisierendes Rampen- oder Keilsystem aufweist, **dadurch gekennzeichnet, dass** die Notlöseeinrichtung (5) ein weiteres Keil- oder Rampensystem aufweist, mit dem die Länge wenigstens eines Druckstempels (7, 8) als ein Kraftübertragungselement der Zuspannvorrichtung veränderlich ist, wobei das weitere Keil- oder Rampensystem Wälzkörper aufweist, mittels derer die axiale Länge von wenigstens einem der Druckstempel schaltbar reduzierbar ist.

2. Scheibenbremse nach Anspruch 1, **dadurch gekennzeichnet, dass** die Notlöseeinrichtung (5) eine Haltevorrichtung zum Blockieren und Lösen des weiteren Keil- oder Rampensystems aufweist.

3. Scheibenbremse nach einem der vorstehenden Ansprüche 1 oder 2, **dadurch gekennzeichnet, dass** die Scheibenbremse zur Realisierung einer Parkbremsfunktion eine zusätzliche Einrichtung zur Überbrückung der Notlöseeinrichtung (5) aufweist.

4. Scheibenbremse nach einem der vorstehenden Ansprüche, **gekennzeichnet durch** eine Krafteinleitungseinrichtung zur Betätigung der Notlöseeinrichtung.

5. Scheibenbremse nach einem der vorstehenden Ansprüche 2 bis 4, **dadurch gekennzeichnet, dass** die Halteeinrichtung (10) als ein Hebelgetriebe mit einem Halteelement (15) und wenigstens einem oder mehreren Kraftspeichern (16, 17) ausgebildet ist.

6. Scheibenbremse nach Anspruch 5, **dadurch gekennzeichnet, dass** im Kraftfluss jedes Druckstempels eine der Notlöseeinrichtungen (5) angeordnet ist, welche von der Halteeinrichtung (10) über zwei zusammenwirkende Kniehebeleinrichtungen (12, 12' und 13, 14) steuerbar ausgebildet ist.

7. Scheibenbremse nach Anspruch 6, **dadurch gekennzeichnet, dass** die andere Kniehebeleinrichtung (13, 14) mit dem Halteelement (15) und einem ersten Kraftspeicher (16) zusammenwirkend verbunden ist.

8. Scheibenbremse nach Anspruch 7, **dadurch gekennzeichnet, dass** das Halteelement (15) als ein Elektromagnet ausgebildet ist.

9. Scheibenbremse nach Anspruch 8, **gekennzeichnet durch** einen bistabilen Elektromagnet mit einem mit dem Kniehebelgetriebe (13, 14) gekoppelten Antriebsschieber (34).

10. Scheibenbremse nach einem der vorstehenden Ansprüche, **dadurch gekennzeichnet, dass** sich die Druckstempel (7, 8) an einem ihrer Enden an einer Rampekonstruktion über wenigstens einen Wälzkörper an einem Widerlager abstützen.

11. Scheibenbremse nach Anspruch 10, **dadurch gekennzeichnet, dass** ein Drehteller (28) an den Druckstempeln (7, 8) zur Bildung der steuerbaren Kraftübertragungseinrichtung zumindest eine Wälzkörperlaufbahn (30) und mindestens einen Anschlag (29) aufweist.

12. Scheibenbremse nach Anspruch 11, **dadurch gekennzeichnet, dass** der Anschlag (29) des Drehtellers (28) mit einem in radialer Richtung des Drehtellers (28) verstellbaren Zahn (31) in Wirkverbindung angeordnet ist, wobei der Zahn (31) durch ein Halteelement (15) und einen zweiten Kraftspeicher (16) verstellbar ist.

13. Scheibenbremse nach Anspruch 12, **dadurch gekennzeichnet, dass** das Halteelement (15) zusammen mit dem zweiten Kraftspeicher (16) den Zahn (31) in einer ersten Stellung im Eingriff mit dem Anschlag (29) des Drehtellers (28) zur Verhinderung einer Drehbewegung des Drehtellers (28), wobei das Kraftübertragungselement (9) in der einen Ausnehmung der Wälzkörperlaufbahn (30) des Drehtellers (28) angeordnet ist, die eine geringere Tiefe in Kraftflussrichtung aufweist, und in einer zweiten Stellung zu Ermöglichung einer Drehbewegung des Drehtellers (28) hält, wobei das Kraftübertragungselement (9) in der anderen Ausnehmung der Wälzkörperlaufbahn (30) des Drehtellers (28) angeordnet ist, die eine größere Tiefe in Kraftflussrichtung aufweist.

14. Scheibenbremse nach Anspruch 13, **dadurch gekennzeichnet, dass** das Halteelement (15) ein Elektromagnet ist.

15. Scheibenbremse nach einem der vorstehenden Ansprüche, **dadurch gekennzeichnet, dass** die Krafteinleitungseinrichtung zur Betätigung der Notlöseeinrichtung einen in einer Aufnahme (36) verschiebbar geführten Stempel (26) aufweist.

16. Scheibenbremse nach Anspruch 15, **dadurch gekennzeichnet, dass** im Kraftfluss der Zuspannvorrichtung in der Aufnahme (36) mehrere übereinander angeordnete Lagen von Wälzkörpern (23) angeordnet sind.

17. Scheibenbremse nach Anspruch 16, **dadurch gekennzeichnet, dass** die Lagen der Wälzkörper (23) in einer vorher festgelegten, zu den einzelnen Lagen versetzt angeordnet sind.

## Claims

1. Disc brake with an electromotive actuator (6) acting on an application device for applying at least one brake pad (4) in the direction of a brake disc (3) in a self-energising design, wherein an emergency release device (5) for releasing the brake from its brake position is arranged in the power train of the application device (7, 8), which is activated automatically in a predefined emergency such as a power failure, which is designed to change the length of a force transmitting element of the application device in a switching manner, wherein the application device (7, 8) has a first ramp or wedge system realising the self-energising effect, **characterised in that** the emergency release device (5) has a further wedge or ramp system, with which the length of at least one plunger (7, 8) can be changed as a force transmitting element of the application device, wherein the further wedge or ramp system has rolling bodies, with which the axial length of at least one of the plungers can be reduced in a shiftable manner.

2. Disc brake according to claim 1, **characterised in that** the emergency release device (5) has a holding device for blocking and releasing the further wedge or ramp system.

3. Disc brake according to one of the preceding claims 1 or 2, **characterised in that** the disc brake for realising a parking brake function has an additional device for overcoming the emergency release device (5).

4. Disc brake according to one of the previous claims, **characterised by** a force initiation device for actuating the emergency release device.

5. Disc brake according to one of the previous claims 2 to 4, **characterised in that** the holding device (10) is formed as a lever gear with a holding element (15) and at least one or several energy stores (16, 17).

6. Disc brake according to claim 5, **characterised in that** one of the emergency release devices (5) is arranged in the power flow of each plunger, which release device is formed in a controllable manner by the holding device (10) via two interacting toggle devices (12, 12' and 13, 14).

7. Disc brake according to claim 6, **characterised in that** the other toggle device (13, 14) is connected in an interacting manner with the holding element (15) and a first energy store (16).

8. Disc brake according to claim 7, **characterised in that** the holding element (15) is formed as a solenoid.

9. Disc brake according to claim 8, **characterised by** a bistable solenoid with a drive pusher (34) coupled to the toggle drive (13, 14).

10. Disc brake according to one of the preceding claims, **characterised in that** the plungers (7, 8) are supported at a ramp construction at one of their ends via at least one rolling body.

11. Disc brake according to claim 10, **characterised in that** a rotary disc (28) at the plungers (7, 8) has at least one rolling body path (30) and at least one stop (29) for forming the controllable force transmitting device.

12. Disc brake according to claim 11, **characterised in that** the stop (29) of the rotary disc (28) is connected in operative connection with a tooth (31) adjustable in the radial direction of the rotary disc (28), wherein the tooth (31) can be adjusted by a holding element (15) and a second energy store (16).

13. Disc brake according to claim 12, **characterised in that** the holding element (15) together with the second energy store (16) brings the tooth (31) into a first position in engagement with the stop (29) of the rotary disc (28) for preventing a rotary movement of the rotary disc (28), wherein the force transmitting element (9) is arranged in the one recess of the rolling body path (30) of the rotary disc (28), which has a lower depth in the power train direction, and holds it in a second position for enabling a rotary movement of the rotary disc (28), wherein the force transmitting element (9) is arranged in the other recess of the rolling body path (30) of the rotary disc (28), which has a larger depth in the power train direction.

14. Disc brake according to claim 13, **characterised in that** the holding element (15) is a solenoid.

15. Disc brake according to one of the preceding claims, **characterised in that** the force initiating device has a plunger guided displaceable in a recesss (36) for actuating the emergency release device.

16. Disc brake according to claim 15, **characterised in that** several layers of rotary bodies (23) arranged above one another are arranged in the power train of the application device.

17. Disc brake according to claim 16, **characterised in that** the layers of the rotary bodies (23) are arranged in a previously determined offset manner to the individual layers.

## Revendications

1. Frein à disque à actionneur électromoteur (6), qui agit sur un dispositif de serrage de frein, conçu en un modèle auto-renforçant, à serrer au moins une garniture de frein (4) en un sens vers un disque de frein (3), à un moyen de desserrage d'urgence (5) étant disposé dans un flux d'énergie dudit dispositif de serrage de frein (7, 8), qui se peut activer de façon automatique en un cas d'urgence prédéfini, comme en cas de coupure de courant, à desserrer le frein en dehors de sa position de freinage et qui est conçu à varier la longueur d'un élément de transmission dudit dispositif de serrage de frein en une fonction de commutation, audit dispositif de serrage de frein (7, 8) comprenant un premier système à rampe ou clavette pour la réalisation de l'effet auto-renforçant, **caractérisé en ce que** ledit moyen de desserrage d'urgence (5) comprend un autre système à clavette ou rampe, moyennant duquel la longueur d'au moins un poinçon-chasse (7, 8) en tant que l'élément de transmission dudit dispositif de serrage de frein est variable, audit autre système à clavette ou rampe comprenant des corps de roulement, moyennant desquels la longueur axiale d'au moins un desdits poinçons-chasse se peut réduire de manière commutable.

2. Frein à disque selon la revendication 1, **caractérisé en ce que** ledit moyen de desserrage d'urgence (5) comprend un dispositif de maintien à bloquer et dégager ledit autre système à clavette ou rampe.

3. Frein à disque selon une quelconque des revendications précédentes 1 ou 2, **caractérisé en ce que** le frein à disque comprend un moyen supplémentaire à ponter ledit moyen de desserrage de frein (5) afin de réaliser une fonction de freinage de stationnement.

4. Frein à disque selon une quelconque des revendications précédentes, **caractérisé par** un moyen d'alimentation d'énergie pour l'actionnement dudit moyen de desserrage d'urgence.

5. Frein à disque selon une quelconque des revendications précédentes 2 à 4, **caractérisé en ce que** ledit moyen de maintien (10) est configuré sous forme d'un mécanisme cinématique à levier, comprenant un élément de maintien (15) et au moins un ou plusieurs accumulateurs d'énergie (16, 17).

6. Frein à disque selon la revendication 5, **caractérisé en ce qu'**un desdits moyens de desserrage d'urgence (5) est disposé dans le flux d'énergie de chaque poinçon-chasse, qui est configuré pour la commande par ledit moyen de maintien (10) via deux moyens à levier à genouillère (12, 12' et 13, 14) en interaction l'un avec l'autre.

7. Frein à disque selon la revendication 6, **caractérisé en ce que** l'autre moyen à levier à genouillère (13, 14) est relié audit élément de maintien (15) et à un premier accumulateur d'énergie (16) pour une interaction.

8. Frein à disque selon la revendication 7, **caractérisé en ce que** ledit élément de maintien est conçu sous forme d'un électroaimant.

9. Frein à disque selon la revendication 8, **caractérisé par** un électroaimant bistable à une coulisse de commande (34) accouplé audit mécanisme à levier à genouillère (13, 14).

10. Frein à disque selon une quelconque des revendications précédentes, **caractérisé en ce que** lesdits poinçons-chasse (7, 8) s'appuient par une de leurs extrémités à une structure à rampe via au moins un corps de roulement à une butée de contre-appui.

11. Frein à disque selon la revendication 10, **caractérisé en ce qu'**un plateau tournant (28) auxdits poinçons-chasse (7, 8) comprend au moins une voie de roulement (30) pour un corps de roulement et au moins une butée (29) afin de former ledit moyen de transmission commandable.

12. Frein à disque selon la revendication 11, **caractérisé en ce que** ladite butée (29) dudit plateau tournant (28) est disposé en connexion active avec un dent (31) réglable en sens radial dudit plateau tournant (28), audit dent (31) étant réglable moyennant un élément de maintien (15) et un deuxième accumulateur d'énergie (16).

13. Frein à disque selon la revendication 12, **caractérisé en ce que** ledit élément de maintien (15), ensemble avec ledit deuxième accumulateur d'énergie (16), maintient ledit dent (31) en une première position en prise avec ladite butée (29) dudit plateau tournant (28) afin d'empêche un mouvement rotatif dudit plateau tournant (28), audit élément de transmission (9) se trouvant dans un premier creux de ladite voie de roulement pour un corps de roulement (30) dudit plateau tournant (28), qui a une plus petite profondeur le long du flux d'énergie, ainsi qu'en une deuxième position afin de permettre un mouvement rotatif dudit plateau tournant (28), audit élément de transmission (9) se trouvant dans l'autre creux de ladite voie de roulement pour un corps de roulement (30) dudit plateau tournant (28), qui présente une plus grande profondeur le long du flux d'énergie.

14. Frein à disque selon la revendication 13, **caractérisé en ce que** ledit élément de maintien (15) est un électroaimant.

15. Frein à disque selon une quelconque des revendications précédentes, **caractérisé en ce que** ledit moyen d'alimentation d'énergie comprend un poinçon (26) guidé, de manière déplaçable, dans un creux récepteur (36), pour la commande dudit moyen de desserrage d'urgence.

16. Frein à disque selon la revendication 15, **caractérisé en ce que** plusieurs couches de corps de roulement (23) sont disposées en un arrangement superposé dans ledit creux récepteur (36) le long du flux d'énergie dudit dispositif de serrage de frein.

17. Frein à disque selon la revendication 16, **caractérisé en ce que** lesdites couches de corps de roulement (23) sont disposées en une position prédéterminée en déport des couches individuelles.
